(19) Europäisches Patentamt

European Patent Office

Office européen des brevets

(11) **EP 1 096 399 A2**

(12) **EUROPEAN PATENT APPLICATION**

(43) Date of publication:
02.05.2001 Bulletin 2001/18

(51) Int. Cl.⁷: **G06F 17/60**

(21) Application number: **00103089.9**

(22) Date of filing: **15.02.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **01.11.1999 JP 31157999**<br><br>(71) Applicant:<br>**Daisho System Service Co., Ltd.,**<br>**Osaka Securities Exchange Building**<br>**Osaka-shi, Osaka 541-0041 (JP)** | (72) Inventor:<br>**Noguchi, Takuo,**<br>**c/o Daisho System Service Co., Ltd**<br>**Osaka-shi, Osaka 541-0041 (JP)**<br><br>(74) Representative: **Betten & Resch**<br>**Reichenbachstrasse 19**<br>**80469 München (DE)** |

(54) **Method and apparatus for determining priority order of transactions, transaction system, recoding medium and program**

(57)     A priority request charge for requesting a priority processing is added to the conditions of transaction, and the conditions of transactions including the priority request charge, the name of stock, quantity, fixed price, type of transaction, i. e. buy order or sell order and the order time are stored in a transaction condition data base as a transaction condition record. A plurality of transaction condition records having the same name of stock, the same fixed price and the same type of transaction are sorted in descending order with the priority request charge as a sort key. The order of priority of a plurality of transactions is determined based on the order of the sorted transaction condition records.

FIG. 3

**EP 1 096 399 A2**

Printed by Xerox (UK) Business Services
2.16.7 (HRS)/3.6

## Description

BACKGROUND OF THE INVENTION

The present invention relates to a method of determining an order of priority of a plurality of transactions based on the conditions of transaction for an object of transaction, an apparatus for determining the order of priority of transactions for carrying out the method, a transaction system using the apparatus, a recording medium having recorded therein a program for realizing the method, the apparatus and the system, and a program.

In conducting a security transaction, an investor desiring the security transaction informs a stock exchange of the conditions of transaction including the name of stock, quantity, transaction type, i.e. sell order or buy order and the order price through a securities company constituting a member of the stock exchange. The stock exchange, after adding the order time to the conditions of transaction received, manages the conditions of transaction as a transaction condition record. A price not lower than the order price for a sell order is matched with a price not higher than the order price for a buy order, so that a transaction is established with a coincident price as a fixed price under the particular conditions of transaction.

In the case where there are a plurality of orders of the same fixed price, however, it is necessary to determine the order of priority among the orders in establishing a transaction. In a method, the order of priority is determined based on the chronological order of incoming orders, so that the transaction between a sell order and a buy order of the same quantity is established in accordance with the priority order thus determined. This transaction method for determination based on "chronological order of priority" is called the order driven transaction method, and a majority of transactions conducted in the trading floor of major stock exchanges including the Osaka Stock Exchange and the Tokyo Stock Exchange follow this rule.

An example of the process for establishing a transaction by the order driven transaction method carried out in the chronological order of priority will be described below with reference to the drawings.

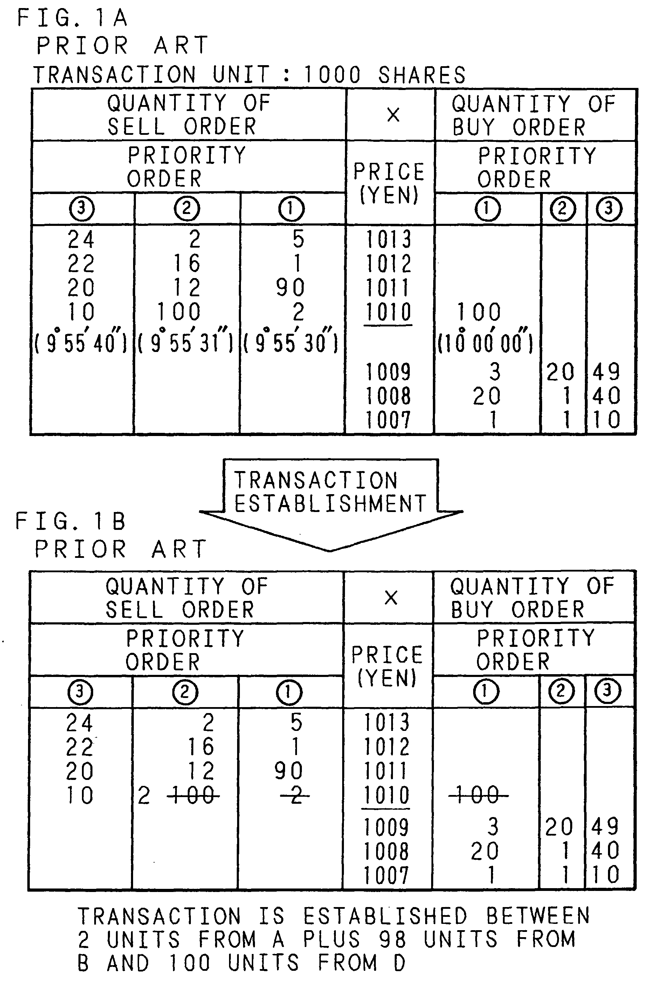

FIGS. 1A, 1B are schematic diagrams showing the order situation in a market using the conventional method of determining the priority order of transactions. FIG. 1A shows the order situation before establishing a transaction, and FIG. 1B shows the order situation after establishing a transaction. FIGS. 1A and 1B show the order situations for the stock name X, and the prices are shown in descending order at the central portion of the drawing, the quantity of sell orders on the left side, and the quantity of buy orders on the right side, each on the same line as the corresponding price. The conditions of transaction at the same price are sorted in ascending order with the order time as a sort key with reference to the transaction condition records indicating the conditions of transaction, so that the order of priority of the transactions is determined in the sorted order, i. e. in the chronological order of incoming orders. For both sell and buy orders, the orders highest in priority are listed toward the center (right side for sell orders, and left side for buy orders), the priority being lowered outward (leftward for sell orders and rightward for buy orders).

The prices shown in the drawing are those after matching, and the following description concerns the case in which the order of priority is determined for the orders having a fixed price of 1010 yen.

In the case of FIG. 1A, for the stock name X with a transaction unit of 1000 shares, a sell order of two units is issued from the securities company A at 9:55:30, a sell order of 100 units from the securities company B at 9:55:31 and a sell order of 10 units from the securities company C at 9:55:40 at the selling price of 1010 yen. Further, a buy order of 100 units is issued from the securities company D at the price of 1010 yen at 10:00:00. Since the priority is determined in the chronological order of incoming orders, as shown in FIG. 1B, a transaction is established between the 100 units of buy order from the securities company D and the two units of sell order from the securities company A plus the 98 units of sell order from the securities company B.

In a transaction using the conventional method of determining the priority order of transactions, however, the transaction is established in the chronological order of incoming orders. In the case where a given order is delayed even by one second behind the order from another company, it may take a long time before a transaction is established. Assume, for example, that a sell order of 200 units is issued for the stock name X from the securities company A at 10:05:30 and a sell order of 10 units from the securities company B at 10:05:31. The transaction condition records indicating the transaction conditions are sorted in ascending order with the order time as a sort key to determine the order of priority of transactions. Now, the securities company A can establish a transaction in priority over the securities company B.

In such a case, 200 units of sell order from the securities company A is a large lot, and therefore the problem is that the securities company B cannot conduct transactions for a considerable length of time before the sell orders from the securities company A are depleted. This may give rise to a disadvantage from the viewpoint of investment strategy.

BRIEF SUMMARY OF THE INVENTION

Accordingly, an object of the present invention is to provide a method of determining an order of priority of transactions of securities, convertible bonds or other objects of transaction, by which the chance of conducting a transaction in priority is offered to securities companies as required, the increased profits are expected for stock exchanges, and the securities market can be vitalized.

Another object of the invention is to provide an apparatus for determining the order of priority of transactions for carrying out the method described above, a transaction system using the apparatus, and a recording medium for recording a program for realizing the method, the apparatus and the system.

According to this invention, apart from the commission paid by the investor to the securities company, a priority request charge for requesting the priority processing is added from the investor or the securities company to the stock exchange, and the priority request charge thus added is included in the conditions of transaction. A plurality of transaction condition records are sorted with the priority request charge as a sort key, i.e. in the descending order of the priority request charge thereby to determine the order of priority of establishing a transaction. In the case where there are a plurality of transactions of the same price and the same type of transaction, i. e. buy order or sell order, the order of priority is determined in the descending order of the priority request charge. As compared with the conventional chronological order of priority system, accurate data on the order time is not required. The order of priority of transactions having the same price, the same type of buy order or sell order and the same priority request charge, however, is determined in the chronological order of incoming orders.

According to the invention, even in the case where the order time is delayed than those of other orderers, the transaction can be established in priority as required, and therefore the disadvantage which otherwise might be caused by the delayed transaction can be avoided. Also, the stock exchange can increase the profit thereof by receiving the priority request charge as a priority commission. Further, the investment strategy is multiplied and the securities market can be vitalized by introducing this new transaction method.

The above and further objects and features of the invention will more fully be apparent from the following detailed description with accompanying drawings.

BRIEF DESCRIPTION OF THE SEVERAL VIEWS OF THE DRAWINGS

FIGS. 1A and 1B are schematic diagrams showing the order situation in a market using the conventional method of determining the order of priority of transactions.

FIG. 2 is a diagram for explaining the concept of the transaction system according to the present invention.

FIG. 3 is a block diagram showing a configuration of the transaction system according to the present invention.

FIG. 4 is a flowchart showing the process of the transaction priority order determining apparatus and transaction units used in the transaction system according to the present invention.

FIG. 5 is a schematic diagram showing the order situation in a market using the method of determining the order of priority of transactions according to the present invention.

FIG. 6 is a schematic diagram showing the order situation in a market using the method of determining the order of priority of transactions according to the present invention.

FIG. 7 is a schematic diagram showing the order situation in the quote driven transactions using the method of determining the order of priority of transactions according to the present invention.

FIGS. 8A and 8B are schematic diagrams showing the order situation in the case where an investor A determines a securities company as the other party of transaction using the method of determining the order of priority of transactions according to the present invention.

DETAILED DESCRIPTION OF THE INVENTION

The present invention will be described in detail below with reference to the drawings showing an embodiment thereof.

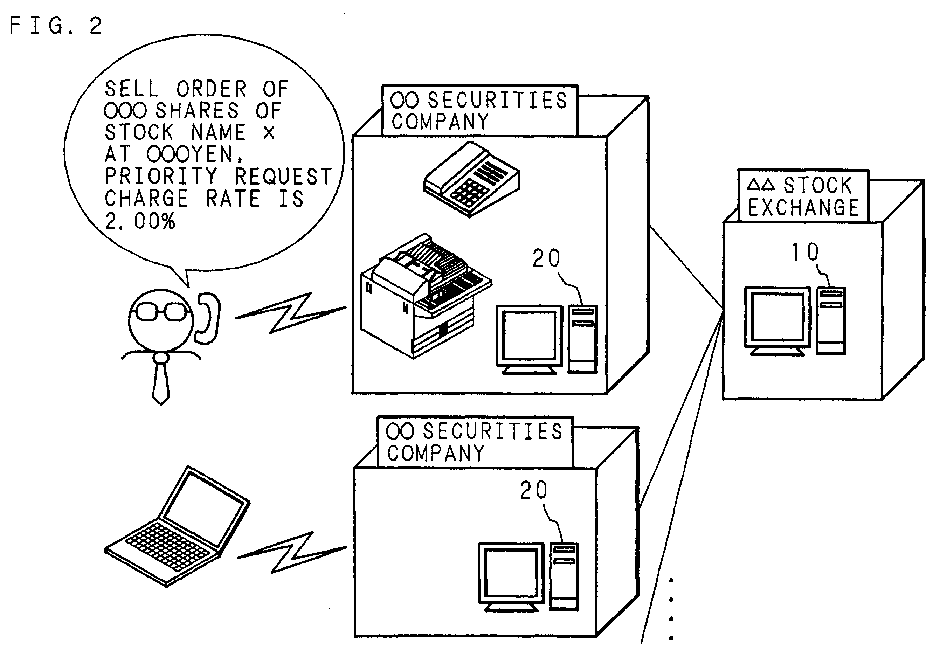

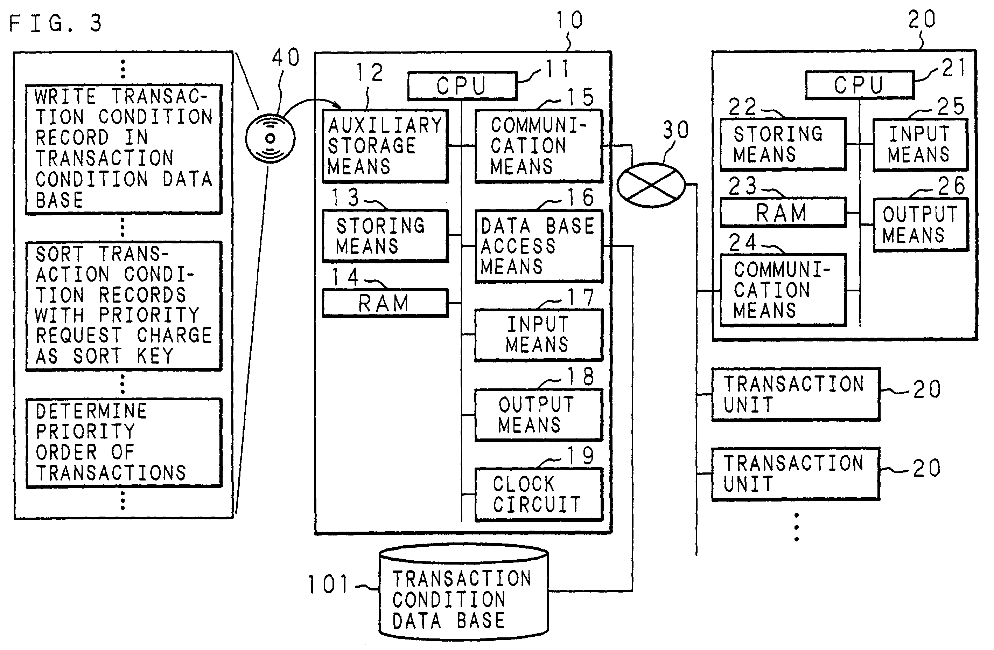

FIG. 2 is a diagram for explaining the concept of a transaction system according to the present invention, and FIG. 3 is a block diagram showing a configuration of a transaction system according to the present invention. In FIGS. 2, 3, reference numeral 10 designates a transaction priority order determining apparatus according to the present invention using a server computer managed by a stock exchange. The transaction priority order determining apparatus 10 is connected through a communication line 30 to transaction units 20, 20,... each having a client computer managed by securities companies, respectively, constituting members of the stock exchange.

The transaction priority order determining apparatus 10 comprises auxiliary storage means 12 such as a CD-ROM drive for reading the information including a program and data from a recording medium 40 such as a CD-ROM having recorded therein the information including the program and data for the transaction priority order determining apparatus according to the present invention, and storing means 13 such as a hard disk for storing the information including the program and data read by the auxiliary storage means 12. The information including the program and data are read from the storing means 13, stored temporarily in a RAM 14 and executed by a CPU 11. In this way, the server computer operates as the transaction priority order determining apparatus 10 according to the present invention.

Further, the transaction priority order determining apparatus 10 comprises communication means 15 for communicating with the transaction units 20, 20,... through the communication line 30, data base access means 16 for accessing a transaction condition data base 101 for storing a plurality of transaction condition records indicating the conditions of transactions of objects such as securities and convertible bonds, input means 17 such as a keyboard or a mouse, output means 18 such as a monitor or a printer, and a clock circuit 19. Part of the storage area of the storing means 13 can be assigned to the transaction condition data base 101.

The transaction condition records stored in the transaction condition data base 101 include data on the transaction conditions representing the contents of the orders from the securities companies managing the transaction units 20 such as the stock name, quantity, the prices such as the order price and the fixed price, type of transaction such as buy order or sell order and a priority request charge (hereinafter sometimes referred to as the charge amount) for requesting the priority processing. The charge amount is defined as the product of a priority request charge rate (hereinafter referred to as the charge rate) of 0. 00% to 100. 00% and the price, and is a commission per unit of transaction paid from the securities company to the stock exchange. The transaction condition record may include the charge rate as the data replacing the charge amount so that the charge amount is calculated from the charge rate and the price as required.

The transaction unit 20 has a substantially similar configuration to the transaction priority order determining apparatus 10, and includes a CPU 21, storing means 22, a RAM 23, communication means 24, input means 25 and output means 26.

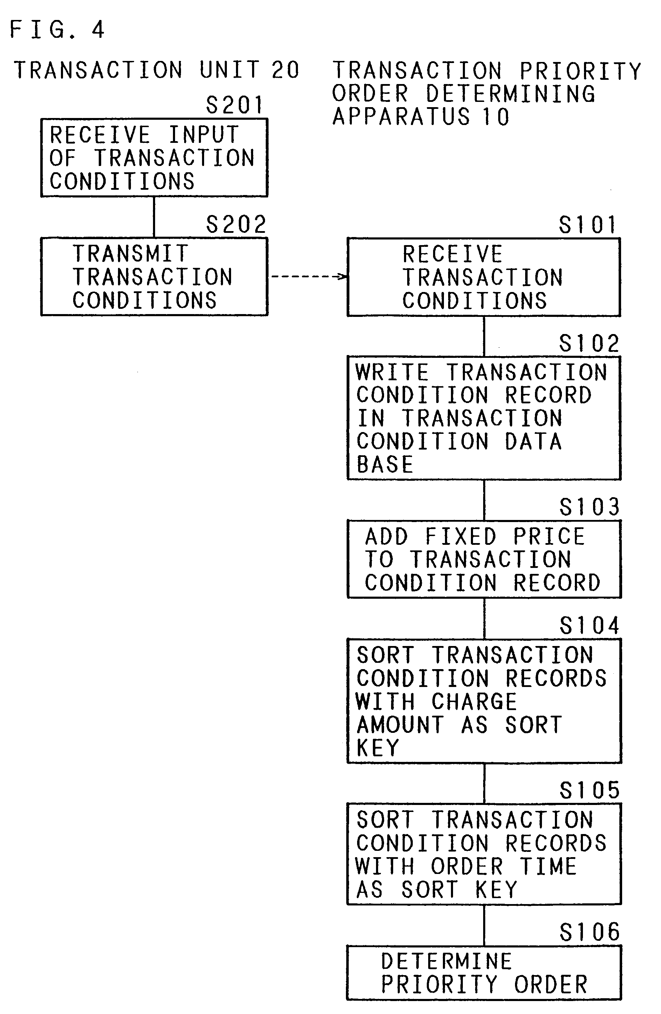

Now, the process in the transaction priority order determining apparatus 10 and the transaction unit 20 of the transaction system according to the present invention will be explained with reference to the flowchart shown in FIG. 4.

First, a person in charge belonging to a securities company, in compliance with an order from an investor desiring a security transaction, for example, inputs the transaction conditions such as the stock name, quantity, price (order price), buy or sell order and the charge rate (or the charge amount) in the transaction unit 20. The order from the investor is received through the communication means such as the telephone or facsimile and inputted from time to time by the person in charge, or can be directly inputted in the transaction unit 20 on-line by the investor using an investor terminal unit connected to the transaction unit 20.

The transaction unit 20 receives the input of the transaction conditions (S201) and transmits them to the transaction priority order determining apparatus 10 (S202).

The transaction priority order determining apparatus 10 receives the transaction conditions (S101), and with reference to the clock circuit 19, adds the time of receipt as an order time to the data of the transaction conditions, and writes the transaction condition record indicating the transaction conditions with the order time added thereto in the transaction condition data base 101 (S102). Further, based on the stock name, the price and the buy order or sell order included in the transaction condition record stored in the transaction conditions data base 101, the prices of the sell order and the buy order are matched with each other, and a price to be used as a fixed price is determined, and the fixed price thus determined is added to the transaction condition record as a transaction condition data (S103).

A plurality of the transaction condition records stored in the transaction condition data base 101 are sorted with the charge amount as a sort key (S104), and further the transaction condition records with the same charge amount are sorted in ascending order with the order time as a sort key (S105), and based on the sorted order of the transaction condition records, the priority order of the transactions is determined (S106).

In this way, in the priority order determining method according to the present invention, the charge amount is used as the first sort key and the order time as the second sort key for sorting to determine the priority order based on the charge amount and the chronological order. The priority order determining process in steps S103 to S106 is executed each time of the update processing such as the writing (addition) of a new transaction condition or deletion, or the correction of the transaction conditions resulting from the establishment of a transaction.

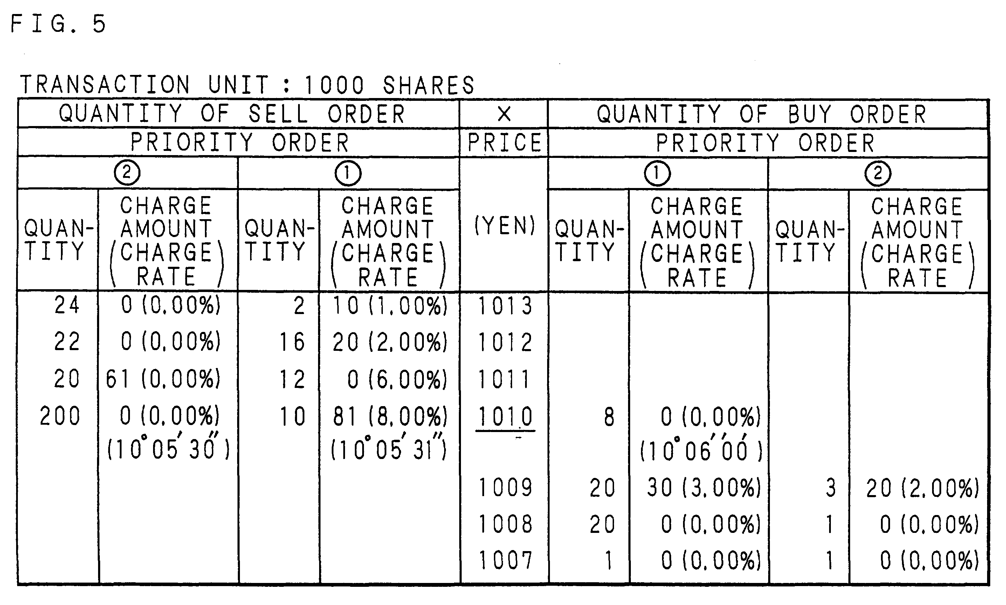

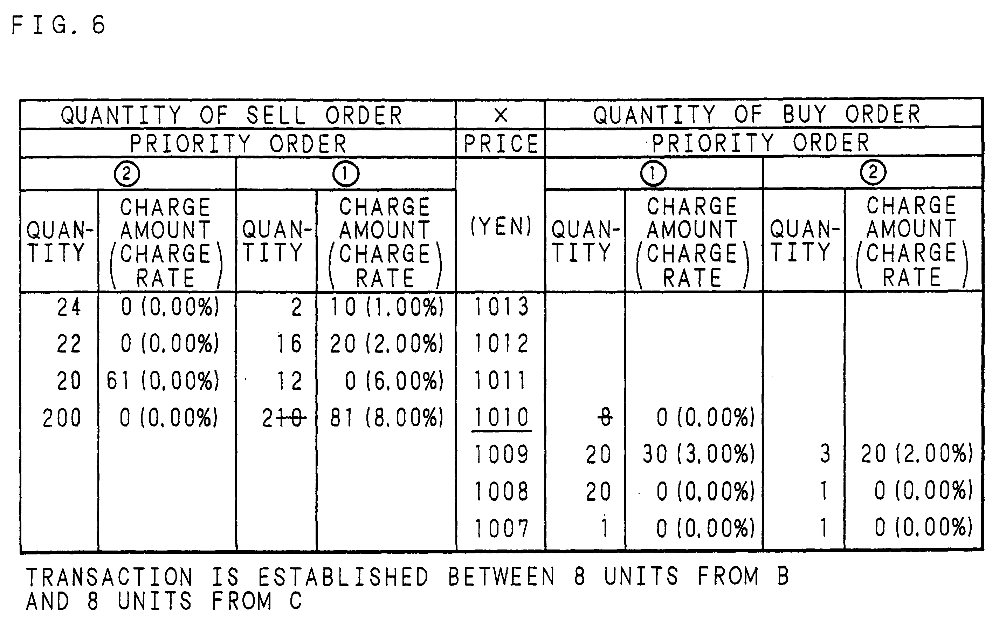

FIGS. 5 and 6 are schematic diagrams showing the order situation in a market using the transaction priority order determining method according to the present invention. FIG. 5 shows the order situation before establishing a transaction, and FIG. 6 the order situation after establishing a transaction. FIGS. 5 and 6 show the order situation for the stock name X, and the prices are shown in descending order vertically at the central portion of each drawing, the quantity of sell orders on the left side and the quantity of buy orders on the right side, respectively, on the same line as the corresponding price outward in the order of priority.

The transaction condition records including the transaction conditions of the same price are sorted in the descending order of the charge amount as the first sort key and in the ascending chronological order of incoming orders as the second sort key. Thus, the order of priority of transactions is determined based on the sorted order, i. e. based on the descending order of charge amount, or in the case where the charge amount is the same, based on the chronological order of incoming orders. The prices shown in the drawing are those after matching, and an explanation will be given below of the case of determining the order of priority for the orders 1010 yen in fixed price.

In the example of FIG. 5, for the stock name X with a unit of transaction of 1000 shares, at the price of 1010 yen, a sell order of 200 units is issued from the securities company A at 10:05:30 at the charge rate of 0.00%, a sell order of 10 units from the securities company B at 10:05:31 at the charge rate of 8. 00% (charge amount of 81 yen). Further, a buy order of 8 units at the price of 1010 yen is issued from the securities company C at 10:06:00 at the charge rate of 0. 00%.

In the conventional method of determining the priority order of transactions chronologically, the priority order is determined in the chronological order of incoming orders, and therefore the transaction with the securities company A is established first, and the securities company B has to wait for the next buy order. In the transaction priority order determining method according to the present invention, on the other hand, the priority order is determined in the descending order of charge amount, and therefore, as shown in FIG. 6, a transaction is established between the buy order of 8 units from the securities company C and the sell order of 8 units from the securities company B. In such a case, the total charge amount of 646 yen (= 1010 yen (price) $\times$ 8. 00 % (charge rate) $\times$ 8 (units transacted) ) is paid to the stock exchange.

According to this embodiment, the transaction priority order determining method according to the present invention is applied to the order driven transactions. However, the present invention is not limited to such a transaction but is also applicable with equal effect to the quote drive transactions in which the position or tone is always displayed during business hours and transactions are conducted at the price designated by market makers for an order.

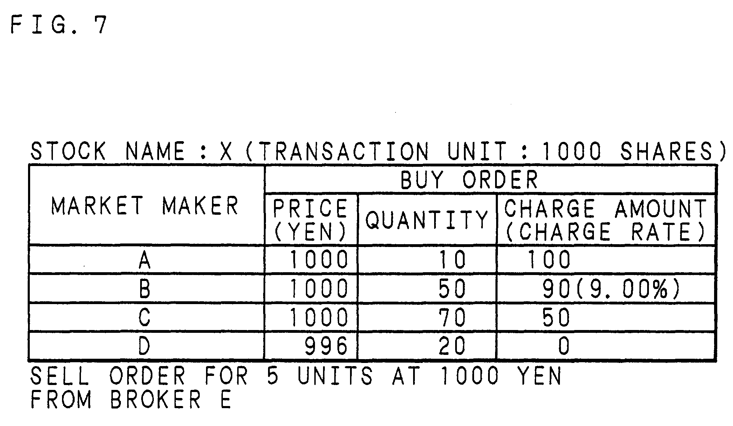

FIG. 7 is a diagram schematically showing the order situation of quote driven transactions to which the transaction priority order determining method according to the present invention is applied. In FIG. 7, market makers A, B, C, D are assumed to indicate the price, quantity and charge amount for the bid of the stock name X with a transaction unit of 1000 shares. The market makers A and C indicate the designated charge amount directly, while the market maker B indicates not the charge amount but the charge rate. FIG. 7 shows the charge rate and the charge amount calculated from the charge rate.

The process will be explained about the case in which the broker E is assumed to have issued a sell order of 5 units (5000 shares) at the price of 1000 yen. The position of the market makers A, B and C is the same 1000 yen, and therefore the priority order is determined among the market makers A, B and C. In the process, the charge amount for the market maker B is calculated at 90 yen (= 1000 yen $\times$ 9.00 % ). With the charge amounts for the market makers A, B and C as a sort key, the sorting is made in descending order so that the priority of the market makers A, B, C is determined in that order. Thus, a transaction of five units is established with the market maker A.

In this example, if the market maker A desires a transaction in priority without using the charge amount, the price is required to be raised from 1000 yen to 1001 yen. Then, the market maker A must bear the burden of an increase of 1000 yen ((= 1001 yen - 1000 yen) $\times$ 1000 shares ) per unit (1000 shares). In the case where the charge amount is used, in contrast, a priority transaction can be conducted with an increase of 100 yen per unit, and therefore as compared with when the price is raised, the cost is reduced by 900 yen (= 1000 yen - 100 yen ). Since the transaction of five units is conducted, the total amount to be paid is reduced by 4500 yen (= 900 yen $\times$ 5 units ).

The foregoing embodiment shows the case in which the stock exchange manages the transaction priority order determining apparatus. The present invention, however, is not limited to such a case. In the case where an institutional investor A desires a transaction, for example, the computer managed by the institutional investor A can be used as a transaction priority order determining apparatus, and securities companies a, b, c likely to transact with the investor A transmit the transaction conditions to the transaction priority order determining apparatus, which determines the priority order of transactions according to the transaction condition records indicating the received transaction conditions.

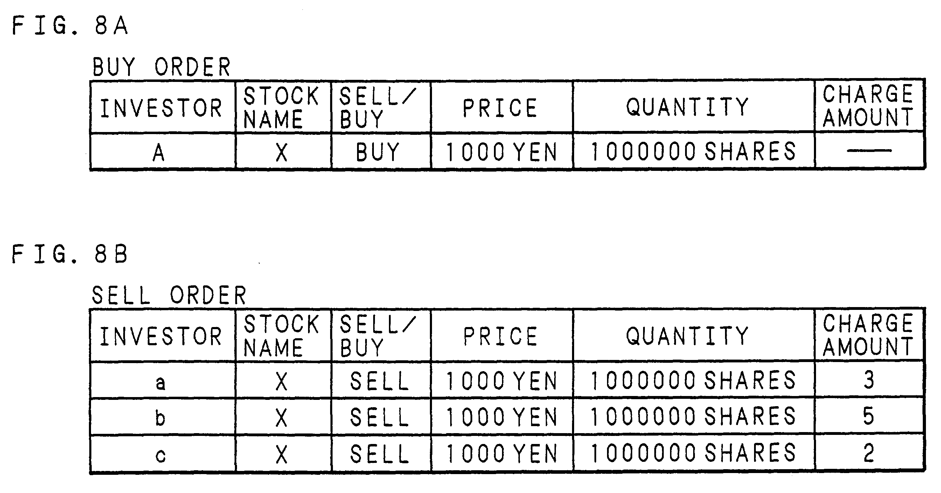

FIGS. 8A and 8B are schematic diagrams showing the order situation in the case where the institutional investor A determines a securities company with which to transact using the transaction priority order determining method according to the present invention. FIG. 8A shows that the institutional investor A has the intention to buy 1000000 shares of the stock name X at 1000 yen, while FIG. 8B shows that the securities companies a, b and c have the intention to sell 1000000 shares of the stock name X at 1000 yen in response to the buy order of the institutional investor A, and propose the commission required for this transaction as a charge amount. In such a case, the securities companies are sorted in the ascending order of the commission, i.e. the charge amount required for the transaction as a sort key to determine the priority order, so that the securities company that has offered the lowest commission is determined as a party to transact with. As described above, according to the present invention, the priority order can be determined by sorting in ascending order depending on the prevailing situation.

Further, although the embodiments described above represent the transaction of securities, the present invention is not limited to such a transaction but equally applicable to marketable securities such as stocks and convertible bonds and also futures of marketable securities, options of marketable securities, futures of marketable securities index, currency and such commodities as wheat and gold or any other commodities handled in the order driven or quote drive transactions. Also, the present invention is applicable not only to a transaction of a single stock name, but also to a basket transaction of a plurality of related names at a time.

In the embodiments described above, the priority order of transactions is determined based on the charge amount (priority request charge), that is to say, with the charge amount (priority request charge) as a sort key, a plurality of transaction condition records are sorted and according to the order indicated by the sorting, the priority order of transactions is determined. Nevertheless, the present invention is of course applicable with equal effect to the case where the priority order of a plurality of transactions is determined based on the charge rate (priority request charge rate). Specifically, with the charge rate (priority request charge rate) as a sort key, a plurality of the transaction condition records are sorted, and based on the sorted order, the order of priority of transactions can of course be determined.

## Claims

1. A method of determining an order of priority of a plurality of transactions based on conditions of transaction for an object of transaction, characterized in that a priority request charge for requesting a priority processing is included in said conditions of transaction.

2. The method of determining the order of priority of transactions according to claim 1, wherein:

   said conditions of transaction include a plurality of parameters other than the priority request charge, and the priority request charge is taken into account before the plurality of parameters when determining the order of priority of the plurality of transactions.

3. The method of determining the order of priority of transactions according to claim 1 or 2, wherein:

   said conditions of transaction include the quantity, price, order time and the type of buy order or sell order for each stock name constituting an object of transaction.

4. The method of determining the order of priority of transactions according to claim 3, wherein:

   the order of priority of a plurality of transactions having the same price and the same type of buy order or sell order, is determined in the descending order of the priority request charge, and the order of priority of a plurality of transactions having the same price and the same type of buy order or sell order and also having the same priority request charge, is determined in the chronological order of incoming orders.

5. The method of determining the order of priority of transactions according to any one of claims 1 to 4, wherein:

   the priority request charge is calculated by multiplying a price by a priority request charge rate designated by a party requesting a transaction.

6. A method of determining an order of priority of a plurality of transactions based on conditions of transaction for an object of transaction, characterized in that a priority request charge rate for requesting a priority processing is included in said conditions of transaction.

7. A method of determining an order of priority of a plurality of security transactions based on conditions of transaction, characterized in that a priority request charge or a priority request charge rate for requesting a priority processing is included in said conditions of transaction.

8. An apparatus (10) for determining an order of priority of a plurality of transactions by accessing a data base (101) having stored therein a plurality of transaction condition records indicating conditions of transaction for an object of transaction, characterized in that:

   said transaction condition records respectively include a priority request charge data indicating a priority request charge for requesting a priority processing; and
   in that said apparatus (10) comprises means (11, S104) for sorting the transaction condition records with said priority request charge data as a sort key, and means (11, S106) for determining the order of priority of a plurality of transactions based on the sorted order of the transaction condition records.

**9.** An apparatus (10) for determining an order of priority of a plurality of transactions by accessing a data base (101) having stored therein a plurality of transaction condition records indicating conditions of transaction for an object of transaction, characterized in that:

said transaction condition records respectively include a priority request charge rate data indicating a priority request charge rate for requesting a priority processing; and
in that said apparatus (10) comprises means (11, S104) for sorting the transaction condition records with said priority request charge rate data as a sort key, and means (11, S106) for determining the order of priority of a plurality of transactions based on the sorted order of the transaction condition records.

**10.** A transaction system characterized in that:

the transaction priority order determining apparatus (10) according to claim 8 or 9 and at least a transaction unit (20) for communicating with said transaction priority order determining apparatus (10) are connected to each other by a communication line (30);
in that said transaction unit (20) includes means (25) for receiving an input of the conditions of transaction, and means (24) for transmitting the received conditions of transaction to said transaction priority order determining apparatus (10) through said communication line (30); and
in that said transaction priority order determining apparatus (10) includes means (16) for writing a transaction condition record indicating the received conditions of transaction in said data base (101).

**11.** The transaction system according to claim 10, wherein:

said transaction priority order determining apparatus (10) is managed by a stock exchange, and said conditions of transaction include the data indicating the quantity, price, order time and the type of sell order or buy order for each stock name constituting an object of transaction.

**12.** A recording medium (40) having a computer readable program code means for causing a computer to determine an order of priority of a plurality of transactions, the computer having the function of accessing a data base (101) having stored therein a plurality of transaction condition records indicating the conditions of transaction for an object of transaction, characterized in that said computer readable program code means includes:

program code means (S102) for causing the computer to write in said data base (101) the transaction condition record having a priority request charge data indicating a priority request charge for requesting a priority processing;
program code means (S104) for causing the computer to sort the transaction condition records with the priority request charge data as a sort key; and
program code means (S105) for causing the computer to determine the order of priority of a plurality of transactions based on the sorted order of the transaction condition records.

**13.** A recording medium (40) having a computer readable program code means for causing a computer to determine an order of priority of a plurality of transactions, the computer having the function of accessing a data base (101) having stored therein a plurality of transaction condition records indicating the conditions of transaction for an object of transaction, characterized in that said computer readable program code means includes:

program code means (S102) for causing the computer to write in said data base (101) the transaction condition record having a priority request charge rate data indicating a priority request charge rate for requesting a priority processing;
program code means (S104) for causing the computer to sort the transaction condition records with the priority request charge rate data as a sort key; and
program code means (S105) for causing the computer to determine the order of priority of a plurality of transactions based on the sorted order of the transaction condition records.

**14.** A computer program comprising computer program code means adapted to perform all the steps of any of claims 1 to 7 when said program is run on a computer.

## FIG. 1A
## PRIOR ART
TRANSACTION UNIT : 1000 SHARES

| QUANTITY OF SELL ORDER | | | X | QUANTITY OF BUY ORDER | | |
|---|---|---|---|---|---|---|
| PRIORITY ORDER | | | PRICE (YEN) | PRIORITY ORDER | | |
| ③ | ② | ① | | ① | ② | ③ |
| 24 | 2 | 5 | 1013 | | | |
| 22 | 16 | 1 | 1012 | | | |
| 20 | 12 | 90 | 1011 | | | |
| 10 | 100 | 2 | 1010 | 100 | | |
| ( 9°55′40″) | ( 9°55′31″) | ( 9°55′30″) | | (10°00′00″) | | |
| | | | 1009 | 3 | 20 | 49 |
| | | | 1008 | 20 | 1 | 40 |
| | | | 1007 | 1 | 1 | 10 |

⬇ TRANSACTION ESTABLISHMENT

## FIG. 1B
## PRIOR ART

| QUANTITY OF SELL ORDER | | | X | QUANTITY OF BUY ORDER | | |
|---|---|---|---|---|---|---|
| PRIORITY ORDER | | | PRICE (YEN) | PRIORITY ORDER | | |
| ③ | ② | ① | | ① | ② | ③ |
| 24 | 2 | 5 | 1013 | | | |
| 22 | 16 | 1 | 1012 | | | |
| 20 | 12 | 90 | 1011 | | | |
| 10 | 2 ~~100~~ | ~~2~~ | 1010 | ~~100~~ | | |
| | | | 1009 | 3 | 20 | 49 |
| | | | 1008 | 20 | 1 | 40 |
| | | | 1007 | 1 | 1 | 10 |

TRANSACTION IS ESTABLISHED BETWEEN
2 UNITS FROM A PLUS 98 UNITS FROM
B AND 100 UNITS FROM D

FIG. 2

EP 1 096 399 A2

FIG. 3

WRITE TRANSAC-
TION CONDITION
RECORD IN
TRANSACTION
CONDITION DATA
BASE

SORT TRANS-
ACTION CONDI-
TION RECORDS
WITH PRIORITY
REQUEST CHARGE
AS SORT KEY

DETERMINE
PRIORITY
ORDER OF
TRANSACTIONS

40

10

12

CPU —— 11

15

AUXILIARY
STORAGE
MEANS

COMMUNI-
CATION
MEANS

13

STORING
MEANS

16

DATA BASE
ACCESS
MEANS

14

RAM

30

17

INPUT
MEANS

18

OUTPUT
MEANS

19

CLOCK
CIRCUIT

101 —— TRANSACTION
CONDITION
DATA BASE

20

CPU —— 21

22

STORING
MEANS

25

INPUT
MEANS

23

RAM

26

OUTPUT
MEANS

24

COMMUNI-
CATION
MEANS

TRANSACTION
UNIT —— 20

TRANSACTION
UNIT —— 20

EP 1 096 399 A2

FIG. 4

TRANSACTION UNIT 20

| S201 |
| --- |
| RECEIVE INPUT OF TRANSACTION CONDITIONS |

| S202 |
| --- |
| TRANSMIT TRANSACTION CONDITIONS |

TRANSACTION PRIORITY ORDER DETERMINING APPARATUS 10

| S101 |
| --- |
| RECEIVE TRANSACTION CONDITIONS |

| S102 |
| --- |
| WRITE TRANSACTION CONDITION RECORD IN TRANSACTION CONDITION DATA BASE |

| S103 |
| --- |
| ADD FIXED PRICE TO TRANSACTION CONDITION RECORD |

| S104 |
| --- |
| SORT TRANSACTION CONDITION RECORDS WITH CHARGE AMOUNT AS SORT KEY |

| S105 |
| --- |
| SORT TRANSACTION CONDITION RECORDS WITH ORDER TIME AS SORT KEY |

| S106 |
| --- |
| DETERMINE PRIORITY ORDER |

## FIG. 5

TRANSACTION UNIT : 1000 SHARES

| QUANTITY OF SELL ORDER | | | | × PRICE (YEN) | QUANTITY OF BUY ORDER | | | |
|---|---|---|---|---|---|---|---|---|
| PRIORITY ORDER | | | | | PRIORITY ORDER | | | |
| ② | | ① | | | ① | | ② | |
| QUAN-TITY | CHARGE AMOUNT (CHARGE RATE) | QUAN-TITY | CHARGE AMOUNT (CHARGE RATE) | | QUAN-TITY | CHARGE AMOUNT (CHARGE RATE) | QUAN-TITY | CHARGE AMOUNT (CHARGE RATE) |
| 24 | 0 (0.00%) | 2 | 10 (1.00%) | 1013 | | | | |
| 22 | 0 (0.00%) | 16 | 20 (2.00%) | 1012 | | | | |
| 20 | 61 (0.00%) | 12 | 0 (6.00%) | 1011 | | | | |
| 200 | 0 (0.00%) (10°05′30″) | 10 | 81 (8.00%) (10°05′31″) | 1010 | 8 | 0 (0.00%) (10°06′00″) | | |
| | | | | 1009 | 20 | 30 (3.00%) | 3 | 20 (2.00%) |
| | | | | 1008 | 20 | 0 (0.00%) | 1 | 0 (0.00%) |
| | | | | 1007 | 1 | 0 (0.00%) | 1 | 0 (0.00%) |

FIG. 6

| QUANTITY OF SELL ORDER | | | | X | QUANTITY OF BUY ORDER | | | |
| PRIORITY ORDER | | | | PRICE | PRIORITY ORDER | | | |
| ② | | ① | | | ① | | ② | |
| QUAN-TITY | CHARGE AMOUNT (CHARGE RATE) | QUAN-TITY | CHARGE AMOUNT (CHARGE RATE) | (YEN) | QUAN-TITY | CHARGE AMOUNT (CHARGE RATE) | QUAN-TITY | CHARGE AMOUNT (CHARGE RATE) |
|---|---|---|---|---|---|---|---|---|
| 24 | 0 (0.00%) | 2 | 10 (1.00%) | 1013 | | | | |
| 22 | 0 (0.00%) | 16 | 20 (2.00%) | 1012 | | | | |
| 20 | 61 (0.00%) | 12 | 0 (6.00%) | 1011 | | | | |
| 200 | 0 (0.00%) | 2~~10~~ | 81 (8.00%) | 1010 | ~~8~~ | 0 (0.00%) | | |
| | | | | 1009 | 20 | 30 (3.00%) | 3 | 20 (2.00%) |
| | | | | 1008 | 20 | 0 (0.00%) | 1 | 0 (0.00%) |
| | | | | 1007 | 1 | 0 (0.00%) | 1 | 0 (0.00%) |

TRANSACTION IS ESTABLISHED BETWEEN 8 UNITS FROM B AND 8 UNITS FROM C

EP 1 096 399 A2

FIG. 7

STOCK NAME : X (TRANSACTION UNIT : 1000 SHARES)

| MARKET MAKER | BUY ORDER | | |
|---|---|---|---|
| | PRICE (YEN) | QUANTITY | CHARGE AMOUNT (CHARGE RATE) |
| A | 1000 | 10 | 100 |
| B | 1000 | 50 | 90(9.00%) |
| C | 1000 | 70 | 50 |
| D | 996 | 20 | 0 |

SELL ORDER FOR 5 UNITS AT 1000 YEN
FROM BROKER E

EP 1 096 399 A2

## FIG. 8A

BUY ORDER

| INVESTOR | STOCK NAME | SELL/ BUY | PRICE | QUANTITY | CHARGE AMOUNT |
|---|---|---|---|---|---|
| A | X | BUY | 1000 YEN | 1000000 SHARES | —— |

## FIG. 8B

SELL ORDER

| INVESTOR | STOCK NAME | SELL/ BUY | PRICE | QUANTITY | CHARGE AMOUNT |
|---|---|---|---|---|---|
| a | X | SELL | 1000 YEN | 1000000 SHARES | 3 |
| b | X | SELL | 1000 YEN | 1000000 SHARES | 5 |
| c | X | SELL | 1000 YEN | 1000000 SHARES | 2 |

EP 1 096 399 A2